# EUROPEAN PATENT SPECIFICATION

(11) **EP 4 543 984 B1**
(45) Date of publication and mention of the grant of the patent: **27.05.2026**
(21) Application number: 23730074.4
(22) Date of filing: 31.05.2023
(51) Int. Cl.: C08L 63/00, C08L 83/06, C08L 83/08

(54) **ROOM TEMPERATURE CURABLE COMPOSITION**
BEI RAUMTEMPERATUR HÄRTBARE ZUSAMMENSETZUNG
COMPOSITION DURCISSABLE À TEMPÉRATURE AMBIANTE

(30) Priority: 22.06.2022 IN 202241035728
(43) Date of publication of application: 30.04.2025
(73) Proprietor: Henkel AG & Co. KGaA, 40589 Düsseldorf (DE)
(72) Inventor: RAIYANI, Dharmishtha Paresh, Kiwale Pune, Maharashtra 412101 (IN); PATEL, Mihirkumar, Pune, 411057 (IN); SHAH, Jayesh P, Pune, 411001 (IN)
(86) International application number: PCT/EP2023/064552
(87) International publication number: WO 2023/247145

(56) References cited:
- WO-A1-2019/205078
- JP-A- S5 291 998
- US-A1- 2012 251 729
- US-A1- 2013 234 070

## Description

### Field of the Invention

The present invention is directed to a two component (2K) composition comprising, as a first component, a silicone-based resin comprising epoxy functionalities, optionally an epoxy resin and optionally a silicone acrylate oligomer and, as a second component, a curative comprising at least one alkoxy-containing aminofunctional silicone resin and an aminoalkoxysilane: the reaction of the two components of said composition provides a cured product exhibiting create workability while maintaining mechanical properties, when cured.

### Background of the Invention

Epoxy composition is well known as a protective coating and decorative coating for steel structure protection in oil & gas industries and marine application which include very harsh environmental conditions. Epoxy compositions are known to have excellent adhesion, corrosion protection & chemical resistance, but they do not offer longer UV and weathering properties, which could be addressed by introducing silicone in the composition. Silicones are well known for excellent weathering properties. Though silicone-epoxy compositions offer excellent UV and weathering properties they sometime do not offer gloss, and turn brittle, which eventually turns out as a weaker link to allow the corrosion to spread across.

US 2013/234070 A1 discloses epoxy-polysiloxane based coating and flooring compositions which may be prepared by combining a polysiloxane, an epoxide resin material, and a cure system including a blend of at least one trialkoxy functional aminosilane and at least one amino functional polysiloxane resin. WO 2019/205078 A1 discloses a polysiloxane resin composition containing a resin which has polydialkylsiloxane unit and epoxy resin unit within its structure, an amino silane, a hydrophilic additive and a catalyst. JP S52 91998 A discloses an acrylic synthetic fiber with slime feeling.

The present inventors have recognized that a need exists to develop curable compositions which offer a good workability while maintained the mechanical properties as a sufficient level, especially the gloss, hardness and weathering properties needs to be maintained simultaneously at a high level

### Statement of the Invention

In accordance with a first aspect of the present invention there is provided a two component (2K) composition comprising:
(A) a first component comprising:
   a) at least one silicone-based resin comprising epoxy functionalities, and
   b) optionally at least one epoxy resin, which is not a silicone-based resin;
   c) optionally at least one silicone acrylate oligomer;
(B) a second component comprising:
   d) a curative which consists of at least one compound possessing at least two epoxide reactive groups per molecule, said curative being characterized by comprising at least one alkoxy-containing aminofunctional silicone resin,
   e) at least one aminoalkoxysilane
wherein said composition is characterized in that it is free of catalysts and preferably the molar ratio of reactive groups provided in component B to reactive groups in component A is from 1.5 : 1 to 1 : 1.5, preferably from 1.1 : 1 to 1: 1.1, more preferably 1:1.

Such compositions address above challenges and exhibit excellent flexibility, weatherability, corrosion resistance, gloss retention and considerably high UV resistance compared to conventional epoxy systems along with easy to clean surface property. This composition cures at room temperature without any accelerator/catalyst and it offers a longer open time, which is specially desire for larger application area with larger volumes.

In another embodiment of the invention, the molar ratio of epoxide reactive groups provided in said component B to epoxide groups in component A is from 1.5 : 1 to 1 : 1.5, preferably from 1.1 : 1 to 1: 1.1, more preferably 1:1.

In yet another embodiment, the molar ratio of silane groups in component B to carbon double bonds, preferably (meth)acrylate groups, is from 1.5 : 1 to 1 : 1.5, preferably from 1.1 : 1 to 1: 1.1, more preferably 1:1.

In a number of embodiments, the two component (2K) composition comprises:
A) a first component comprising, based on the weight of said first component:
   from 5 to 60 wt.% of a) said at least one silicone epoxy resin a);
   optionally from 1 to 50 wt.% of b) said at least one epoxy resin b);
   optionally from 1 to 20 wt.% of c) said at least one silicone acrylate oligomer c)
B) a second component comprising, based on the weight of said first component, preferably consisting of:
   from 50 to 85 wt.% of d) said curative d); preferably from 60 to 80 wt.%
   from 15 to 50 wt.% of e) said at least one aminoalkoxysilane e); preferably from 20 to 40 wt.%
wherein said composition is characterized in that it is free of catalysts and preferably the molar ratio of reactive groups provided in component B to reactive groups in component A is from 1.5 : 1 to 1 : 1.5, preferably from 1.1 : 1 to 1: 1.1, more preferably 1:1.

It is preferred that the silicone-based resin a) comprising epoxy functionalities has an epoxy equivalent weight in the range of from 100 to 1500 g/eq, preferably in the range of from 200 to 1000 g/eq, more preferably in the range of from 300 to 700 g/eq.

It is preferred that said curative d) comprises at least one alkoxy-containing aminofunctional silicone resin (C¹) having at least two amine hydrogen atoms per molecule, having an amine hydrogen equivalent weight of from 100 to 1500 g/eq. and having a total alkoxy content (AC) of from 10 to 40 mole percent based on the number of moles of silicon, said resin (C¹) comprising the units:

(R₃Si(OR')_{w}O_{(1-w)/2})ₐ (i);

(R₂Si(OR')ₓO_{(2-x)/2})_{b} (ii);

(RSi(OR')_{y}O_{(3-y)/2})_{c} (iii);

and,

(Si(OR')_{z}O_{(4-z/2})_{d} (iv)

wherein:
each R is independently selected from a C₁-C₁₈ alkyl group, a C₆-C₁₈ aryl group, or an aminofunctional hydrocarbon group having the formula -R²NHR³ or -R²NHR²NHR³ of which each R² is independently a C₂-C₂₀ alkylene group and R³ is a C₁-C₆ alkyl group;
a, b, c, and d define the mole fractions of each unit (i) to (iv) respectively, such that a+b+c+d=1; and,
w, x, y, and z define the mole fractions of alkoxy groups such that 0 ≤ w < 1, 0 ≤ x < 2, 0 ≤ y < 3, and, 0 ≤ z < 4.

Having regard to said alkoxy-containing aminofunctional silicone resin (C¹), it is favored for each R to be independently selected from a C₁-C₆ alkyl group, a C₆-C₁₈ aryl group or an aminofunctional hydrocarbon group having the formula -R¹NHR² or -R¹NHR¹NHR² of which each R¹ is independently a C₂-C₈ alkylene group and R² is a C₁-C₂ alkyl group. Moreover, good results have been obtained where that alkoxy-containing aminofunctional silicone resin (C¹) has both methyl and phenyl substitution at R

Without wishing to be bound by theory, the present composition cures in the absence of catalysis by a dual cure mechanism: the reaction of the amine hydrogen atoms of the alkoxy-containing aminofunctional silicone resin curative with the epoxide groups; and, the self-condensation of the reactive alkoxy groups of that curative compound. In addition, if carbon double bonds are present these can crosslink with the silane functionalities. This curing mechanism has been found be effective under ambient conditions and results in a highly cross-linked system. Moreover, despite the absence of a catalyst, the open time of the compositions is not considered depreciatory.

In accordance with a second aspect of the present invention, there is provided a cured product obtained from the two component (2K) composition as defined herein above and in the appended claims. The present invention further relates to the cured reaction product as a coating, sealant or adhesive.

### Definitions

As used herein, the singular forms "*a*", "*an*" and "*the*" include plural referents unless the context clearly dictates otherwise.

The terms "*comprising*", "*comprises*" and "*comprised o*f" as used herein are synonymous with "*including*", "*includes*", "*containing*" or "*contains*", and are inclusive or open-ended and do not exclude additional, non-recited members, elements or method steps. If used, the phrase "*consisting of*" is closed and excludes all additional elements. Further, the phrase "*consisting essentially of*" excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words "*preferred*", "*preferably*", "*desirably*" and "*particularly*", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

As used herein, room temperature is 23°C plus or minus 2°C. As used herein, "*ambient conditions*" means the temperature and pressure of the surroundings in which the composition is located or in which a coating layer or the substrate of said coating layer is located.

As used herein, the term "*equivalent (eq.")* relates, as is usual in chemical notation, to the relative number of reactive groups present in the reaction.

The term "*equivalent weight*" as used herein refers to the molecular weight divided by the number of a function concerned. As such, "*epoxy equivalent weight*" (EEW) means the weight of resin, in grams, that contains one equivalent of epoxy. Equally, the "*amine hydrogen equivalent weight*" (AHEW) is the weight of the organic amine, in grams, that contains one amine hydrogen.

As used herein, the term "*(co)polymer*" includes homopolymers, copolymers, block copolymers and terpolymers.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "*monoepoxide compound*" is meant to denote epoxide compounds having one epoxy group. The term "*polyepoxide compound*" is meant to denote epoxide compounds having at least two epoxy groups. The term "*diepoxide compound*" is meant to denote epoxide compounds having two epoxy groups.

The epoxide may be unsubstituted but may also be inertly substituted. Exemplary inert substituents include chlorine, bromine, fluorine and phenyl.

The silicone-based resin comprising epoxy functionalities a) and the optionally elastomer modified epoxy resin b) are different substances, and if both are present, one resin cannot act as both: a) and b).

As used herein, "*C₁-Cₙ alkyl*" group refers to a monovalent group that contains 1 to n carbons atoms, that is a radical of an alkane and includes straight-chain and branched organic groups. As such, a "*C₁-C₃₀ alkyl*" group refers to a monovalent group that contains from 1 to 30 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1-18 carbon atoms (C₁-C₁₈ alkyl) - for example unsubstituted alkyl groups containing from 1 to 12 carbon atoms (C₁-C₁₂ alkyl) or from 1 to 6 carbon atoms (C₁-C₆ alkyl) - should be noted.

The term "*C₃ -C₃₀ cycloalkyl*" is understood to mean a saturated, mono-, bi- or tricyclic hydrocarbon group having from 3 to 30 carbon atoms. In general, a preference for cycloalkyl groups containing from 3-18 carbon atoms (C₃-C₁₈ cycloalkyl groups) should be noted. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryl*" group used alone or as part of a larger moiety - as in "*aralkyl group*" - refers to optionally substituted, monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. Exemplary aryl groups include: phenyl; indenyl; naphthalenyl, tetrahydronaphthyl, tetrahydroindenyl; tetrahydroanthracenyl; and, anthracenyl. And a preference for phenyl groups may be noted.

As used herein, "*C₂-C₂₀ alkenyl*" refers to hydrocarbyl groups having from 2 to 20 carbon atoms and at least one unit of ethylenic unsaturation. The alkenyl group can be straight chained, branched or cyclic and may optionally be substituted. The term "*alkenyl*" also encompasses radicals having "*cis*" and "*trans*" configurations, or alternatively, "*E*" and "*Z*" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂-C₁₂ alkenyl groups include, but are not limited to: -CH=CH₂; -CH=CHCH₃; -CH₂CH=CH₂; -C(=CH₂)(CH₃); -CH=CHCH₂CH₃; -CH₂CH=CHCH₃; -CH₂CH₂CH=CH₂; - CH=C(CH₃)₂; -CH₂C(=CH₂)(CH₃); -C(=CH₂)CH₂CH₃; -C(CH₃)=CHCH₃; -C(CH₃)CH=CH₂; - CH=CHCH₂CH₂CH₃; -CH₂CH=CHCH₂CH₃; -CH₂CH₂CH=CHCH₃; -CH₂CH₂CH₂CH=CH₂; - C(=CH₂)CH₂CH₂CH₃; -C(CH₃)=CHCH₂CH₃; -CH(CH₃)CH=CHCH; -CH(CH₃)CH₂CH=CH₂; - CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, "*alkylaryl*" refers to alkyl-substituted aryl groups and "*substituted alkylaryl*" refers to alkylaryl groups further bearing one or more substituents as set forth above.

The term "*hetero*" as used herein refers to groups or moieties containing one or more heteroatoms, such as N, O, Si and S. Thus, for example "heterocyclic" refers to cyclic groups having, for example, N, O, Si or S as part of the ring structure. "*Heteroalkyl*" and "*heterocycloalkyl*" moieties are alkyl and cycloalkyl groups as defined hereinabove, respectively, containing N, O, Si or S as part of their structure.

As used herein, the term "*catalytic amount*" means a sub-stoichiometric amount of catalyst relative to a reactant, except where expressly stated otherwise.
- As employed herein a "*primary amino group*" refers to an NH₂ group that is attached to an organic radical, and a "*secondary amino group*" refers to an NH group that is attached to two organic radicals, which may also together be part of a ring. Where used, the term "*amine hydrogen*" refers to the hydrogen atoms of primary and secondary amino groups.
- Where "*amine number*" is mentioned herein, this is determinable by titration of the amine acetate ion by a dilute, typically 1N HCI solution. For a pure material, the amine number can be calculated using the molecular weights of the pure compound and KOH (56.1 g/mol). Instructive guidance may be found, for illustration, in https://dowac.custhelp.com/app/answers/detail/a_id/12987.

*"Two-component (2K) compositions"* in the context of the present invention are understood to be compositions in which a binder component (A) and a hardener component (B) must be stored in separate vessels because of their (high) reactivity. The two components are mixed only shortly before application and then react, typically without additional activation, with bond formation and thereby formation of a polymeric network. Herein higher temperatures may be applied in order to accelerate the cross-linking reaction.

Viscosities of the coating compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

The term "*polyol*" as used herein shall include diols and higher functionality hydroxyl compounds.

The hydroxyl (OH) values given herein are measured according to Japan Industrial Standard (JIS) K-1557, 6.4. The isocyanate content values given herein are measured according to EN ISO 1 1909.

The molecular weights referred to in this specification can be measured with gel permeation chromatography (GPC) using polystyrene calibration standards, such as is done according to ASTM 3536.

As used herein, "*anhydrous*" means the relevant composition includes less than 0.25% by weight of water. For example the composition may contain less than 0.1% by weight of water or be completely free of water. The term "*essentially free of solvent*" should be interpreted analogously as meaning the relevant composition comprises less than 0.25% by weight of solvent.

### Detailed Description of the Invention

### a) Silicone-based Resin comprising Epoxy Functionalities

The two (2K) component composition of the present invention should typically comprise a) the silicone-based resin comprising epoxy functionalities in an amount of from 5 to 60 wt.%, preferably from 7 to 40 wt.% based on the weight of the first component thereof. In an alternative expression of the preferred constitution of the present composition, which is not intended to be mutually exclusive of that mentioned above, the composition may contain from 2 to 40 wt.%, based on the weight of the composition, of silicone-based resin(s) a) comprising epoxy functionalities. For example, the composition of the present invention may contain from 5 to 50 wt.%, preferably 5 to 30 wt.%, more preferably from 5 to 20 wt.% of said silicone-based resin(s) a) comprising epoxy functionalities, based on the weight of the total composition.

The silicone-based resin comprising epoxy functionalities exhibits the characteristics of a silicone resin, but also comprises epoxy moieties which may be crosslinked by the epoxy curing agents as described herein. In particular, it is preferred that the silicone-based resin comprising epoxy functionalities comprises alkoxy-silicone moieties. Typically, the silicone-based resin comprising epoxy functionalities is a silicone-epoxy elastomer. Such silicone-based resin comprising epoxy functionalities may be obtained from at least one epoxy resin and at least one alkoxy-silicone resin. Typically, they may be obtained by reacting at least one epoxy resin with at least one alkoxy-silicone resin and preferably at least one hydroxyl-functional compound. Aliphatic epoxy resins are particularly preferred. Preferably, the silicone-based resin comprising epoxy functionalities is liquid at ambient temperatures and pressures. In this regard, it is preferred that the silicone-based resin comprising epoxy functionalities has a viscosity at 25 °C according to ASTM D445 in the range of from 500 to 2500 m Pa s, preferably in the range of from 800 to 2200 m Pa s, more preferably in the range of from 1000 to 2000 m Pa s, even more preferably in the range of from 1200 to 1800 m Pa s. Higher or lower viscosities were found not to be practicable for the scope of the present disclosure.

The silicone-based resin comprising epoxy functionalities generally comprises epoxy moieties which afford crosslinking abilities with the curative as described herein. With regard to the epoxy moieties present in the silicone-based resin comprising epoxy functionalities, it is preferred that the silicone-based resin comprising epoxy functionalities has an epoxy equivalent weight according to ASTM D1652 in the range of from 100 to 1500 g/eq, preferably in the range of from 200 to 1000 g/eq, more preferably in the range of from 300 to 700 g/eq. An example for a silicone-based resin comprising epoxy functionalities advantageously used in the scope of the present disclosure is Silikopon^{®} EF (Evonik Industries).

### b) Epoxy Resin

The two (2K) component composition of the present invention can preferably comprise an epoxy resins b), preferably in an amount of from 1 to 50 wt.%, preferably from 10 to 40 wt.% based on the weight of the first component thereof. This epoxy resin is different from said resin a) and is not a silicone-based resin. In an alternative expression of the preferred constitution of the present composition, which is not intended to be mutually exclusive of that mentioned above, the composition may contain from 1 to 50 wt.%, based on the weight of the composition of epoxy resin(s) a). For example, the composition of the present invention may contain from 5 to 40 wt.%, for example from 5 to 30 wt.% of said epoxy resin(s) a), based on the weight of the composition.

Epoxy resins as used herein may include mono-functional epoxy resins, multi- or poly-functional epoxy resins, and combinations thereof. The epoxy resins may be pure compounds but equally may be mixtures epoxy functional compounds, including mixtures of compounds having different numbers of epoxy groups per molecule. An epoxy resin may be saturated or unsaturated, aliphatic, cycloaliphatic, aromatic or heterocyclic and may be substituted. Most preferred the epoxy resin is cycloaliphatic or aromatic. Further, the epoxy resin may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

Preferred monoepoxides include: ethylene oxide; 1,2-propylene oxide (propylene oxide); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

Again, without intention to limit the present invention, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present invention, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C1-C18 alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

Glycidyl esters of polycarboxylic acids having utility in the present invention are derived from polycarboxylic acids which contain at least two carboxylic acid groups and no other groups reactive with epoxide groups. The polycarboxylic acids can be aliphatic, cycloaliphatic, aromatic and heterocyclic. The preferred polycarboxylic acids are those which contain not more than 18 carbon atoms per carboxylic acid group of which suitable examples include but are not limited to: oxalic acid; sebacic acid; adipic acid; succinic acid; pimelic acid; suberic acid; glutaric acid; dimer and trimer acids of unsaturated fatty acids, such as dimer and trimer acids of linseed fatty acids; phthalic acid; isophthalic acid; terephthalic acid; trimellitic acid; trimesic acid; phenylene-diacetic acid; chlorendic acid; hexahydrophthalic acid, in particular hexahydroorthophthalic acid (1,2-cyclohexanedicarboxylic acid); diphenic acid; naphthalic acid; polyacid terminated esters of di-basic acids and aliphatic polyols; polymers and co-polymers of (meth)acrylic acid; and, crotonic acid.

And examples of highly preferred polyepoxide compounds include: bisphenol-A epoxy resins, such as DER^{™} 331, DER^{™} 383 and Epotec YD 128; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; sorbitol glycidyl ether, such as ERISYS^{™} GE-60; and, bis(2,3-epoxypropyl)cyclohexane-1,2-dicarboxylate, available as Lapox Arch-11.

### c) Silicone Acrylate Oligomer

Additionally, the two (2K) component composition of the present invention can preferably comprise an silicone acrylate oligomer c), preferably in an amount in an amount of from 1 to 20 wt.%, preferably from 2 to 10 wt.% based on the weight of the first component thereof. In an alternative expression of the preferred constitution of the present composition, which is not intended to be mutually exclusive of that mentioned above, the composition may contain from 0.5 to 15 wt.%, based on the weight of the composition, of silicone-based resin(s) a) comprising epoxy functionalities. For example, the composition of the present invention may contain from 1 to 10 wt.%, for example from 2 to 5 wt.% of said silicone-based resin(s) a) comprising epoxy functionalities, based on the weight of the total composition.

In the present invention, the silicone acrylate oligomer is an acrylate polymer having a Si-O bond as a main chain structure. The silicone acrylate oligomer has preferably two or more polymerizable functional groups, and specifically, may include one or more of a bifunctional oligomer, a trifunctional oligomer, a tetrafunctional oligomer, and a hexafunctional oligomer. Most preferably the silicone acrylate oligomer as in average two polymerizable functional groups. The silicone acrylate oligomer may be formed by reacting a silane compound (e.g., polyesterdimethylsiloxanediol, polyetherdimethylsiloxanediol, polycarbonatedimethylsiloxanediol, etc.) with an acrylate compound (e.g., hydroxyethyl acrylate, hydroxybutyl methacrylate, etc.). Such multifunctional silicone acrylate oligomers are prepared by reacting acrylic monomers such as alkylacrylates, alkyl (meth) acrylates and 3-methacrylopropyltrimethoxysilane having silicon (Si) containing functional groups, MPTS), or a silicone urethane acrylate polymer or a silicone polyester acrylate polymer obtained by modifying a urethane acrylate polymer or a polyester acrylate with silicon (Si). Further, the polyfunctional silicone acrylate oligomer may be a polyfunctional oligomer including two or more polymerizable functional groups, and specifically, may include one or more of a bifunctional oligomer, a trifunctional oligomer, a tetrafunctional oligomer, and a hexafunctional oligomer. Further, the average weight average molecular weight (Mw) of the polyfunctional silicone acrylate oligomer may be 500 to 20,000, and specifically, 500 to 30000, 1000 to 20000 or most preferably 2000 to 10000,

### c) Curative 1

The curative d) necessarily consists of at least one compound possessing at least two epoxide reactive groups per molecule, said curative being characterized by comprising at least one alkoxy-containing aminofunctional silicone resin. Epoxide reactive groups are groups which can react with epoxy groups. The alkoxy-containing aminofunctional silicone resin should be characterized by at least one of: i) an amine hydrogen equivalent weight of from 80 or from 100 to 1500 g/eq., preferably from 150 to 700 g/eq. for example from 200 to 500 g/eq; and, ii) a weight average molecular weight (Mw), determined by gel permeation chromatography, of from 150 to 10000 g/mol, preferably from 150 to 8,000 g/mol, for example from 150 to 5,000 g/mol.

In an important embodiment of the present invention, the curative c) comprises or consists of at least one alkoxy-containing aminofunctional silicone resin (C¹) having at least two amine hydrogen atoms per molecule, having an amine hydrogen equivalent weight of from 100 to 1500 g/eq. and having a total alkoxy content (AC) of from 10 to 40 mole percent based on the number of moles of silicon, said resin (C¹) comprising the units:

(R₃Si(OR')_{w}O_{(1-w)/2})ₐ (i);

(R₂Si(OR')ₓO_{(2-x)/2})_{b} (ii);

(RSi(OR')_{y}O_{(3-y)/2})_{c} (iii);

and,

(Si(OR')_{z}O_{(4-z/2})_{d} (iv)

wherein:
each R is independently selected from a C₁-C₁₈ alkyl group, a C₆-C₁₈ aryl group, or an aminofunctional hydrocarbon group having the formula -R²NHR³ or -R²NHR²NHR³ of which each R² is independently a C₂-C₂₀ alkylene group and R³ is a C₁-C₆ alkyl group;
a, b, c, and d define the mole fractions of each unit (i) to (iv) respectively, such that a+b+c+d=1; and,
w, x, y, and z define the mole fractions of alkoxy groups such that 0 ≤ w < 1, 0 ≤ x < 2, 0 ≤ y < 3, and, 0 ≤ z < 4 and are selected to meet the above defined total alkoxy content (AC).

In preferred embodiments, each R in C¹ is independently selected from a C₁-C₁₂ alkyl group, a C₆-C₁₈ aryl group or aminofunctional hydrocarbon group having the formula -R²NHR³ or - R²NHR²NHR³ of which each R² is independently a C₂-C₁₂ alkylene group and R³ is a C₁-C₄ alkyl group.

In particularly preferred embodiments, each R in C¹ is independently selected from a C₁-C₆ alkyl group, a C₆-C₁₈ aryl group or aminofunctional hydrocarbon group having the formula -R¹NHR² or - R¹NHR¹NHR² of which each R¹ is independently a C₂-C₈ alkylene group and R² is a C₁-C₂ alkyl group. A definitive preference may be mentioned for aminofunctional silicone resins (C¹) having both methyl and phenyl substitution at R

As noted, subscripts a, b, c, and d in the amino-functional silicone resin (C¹) formulated above describe the mole fractions of each unit, such that a+b+c+d=1. Those mole fractions should meet the following conditions: i) a has a value of from 0 to 0.40, preferably from 0 to 0.20, for example from 0 to 0.10; ii) b has a value of ≥ 0.15, preferably a value of from 0.15 to 0.8, for example from 0.15 to 0.6; iii) c meets the condition 0 < c < 0.85 and preferably 0 < c < 0.80; and, iv) d has a value of from 0 to 0.20, preferably from 0 to 0.10, for example from 0 to 0.05.

The skilled artisan will recognize that the total alkoxy content (AC) of the alkoxy-containing aminofunctional silicone resin (C¹) as formulated above is represented by the sum of (wa) + (xb) + (yc) + (zd). Desirably, the total alkoxy content should be within the range of from 10 to 30 mole percent based on the number of moles of silicon in the resin and preferably in the range of from 10 to 25 mole percent or from 10 to 20 mole percent on that basis.

There is no intention to limit the methods by which the alkoxy-containing aminofunctional silicone resins (C¹) defined herein above can be prepared. The disclosure of US2012/0251729 (Horstman et al.) is however instructive on exemplary synthetic processes.

Without intention to limit the present invention, the following may also be mentioned as exemplary alkoxy-containing aminofunctional silicone resins having utility as or in the curative c): γ-aminopropyltriethoxysilane; γ-aminopropyltriethoxysilane; γ-aminopropyltrimethoxysilane; γ-aminopropylsilsesquioxane; γ-aminopropyltrimethoxysilane; N-β-(aminoethyl)-γ-aminopropyltrimethoxysilane; benzylamino-silane; bis-(γ-triethoxysilylpropyl)amine; bis-(γ-trimethoxysilylpropyl)amine; N-β-(aminoethyl)-γ-aminopropylmethyldimethoxysilane; and, N-ethyl-3-trimethoxysilyl-methylpropamine.

And the following commercial alkoxy-containing aminofunctional silicone resins may also be useful: Silquest A-1130, Silquest A-1387, Silquest Y-19139, Silquest VX 225 and Silquest Y-15744, available from Momentive Performance Materials Inc; and, HP2000 available from Wacker Chemie.

Whilst it is preferred that the curative c) consists of or consists essentially of said alkoxy-containing aminofunctional silicone(s), the presence of other curing agents in an amount up to 10 mol.%, based on the total moles of said alkoxy-containing aminofunctional silicone(s) is not precluded by the present invention. Supplementary curatives may, in particular, include mercapto compounds having at least two mercapto groups reactive toward epoxide groups or at least one polyamine compound which does not have an alkoxy functional group.

When formulating the curable composition, it is preferred that the composition *in toto* be characterized by a molar ratio of epoxide-reactive groups to epoxide groups from 1.5 : 1 to 1: 1.5, for example from 1.1 : 1 to 1: 1.1. Notably, the molar ratio of epoxide-reactive groups to epoxide groups of 1:1 is included within these stated ranges and itself represents a highly preferred molar ratio.

### e) Aminoalkoxysilane

In preferred embodiments, the aminoalkoxysilane used has the general formula (I) 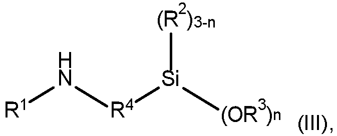 wherein R¹ is hydrogen, R² and R³ are same or different and are, independently from one another, selected from a linear or branched, substituted or unsubstituted C1-C20 alkyl or C6-C18 aryl residue, preferably selected from a C1-C8 alkyl residue, more preferably a methyl, ethyl or propyl residue, which may be interrupted by at least one heteroatom; R⁴ is selected from a linear or branched, substituted or unsubstituted C1-C20 alkylene residue, preferably a C1-C8 alkylene, more preferably a methylene, ethylene, 1,3-propylene, 2-methyl-1,3-propylene, or 1,4-butylene residue, most preferably a methylene or 1,3-propylene residue, which may be interrupted by at least one heteroatom; and n is 0, 1, 2 or 3, preferably 3.

Examples of the aminoalkoxysilane include, but are not limited to: aminoalkylenealkoxysilane, such as N-cyclohexylaminomethylmethyldiethoxysilane, N-cyclohexylaminomethyltriethoxysilane, N-phenylaminomethyltrimethoxysilane, N-cyclohexyl-3-aminopropyltrimethoxysilane, 3-ureidopropyltrimethoxysilan, vinylbenzylaminoethylaminopropyltrimethoxysilane, aminoethylaminopropyltrimethoxysilane, for example, Dow Corning^{®} Z-6121 Silane of Dow Corning, aminoethylaminopropylsilanetriol homopolymer, for example, Dow Corning^{®} Z-6137 Silane of Dow Corning, bis(3-triethoxysilylpropyl)amine, bis(3-trimethoxysilylpropyl)amine, oligoaminosilanes, for example, Dynasylan^{®} 1133 of Evonik, aminosilane compositions, for example, Dynasylan^{®} 1204, Dynasylan^{®} AMEO-T, Dynasylan^{®} SIVO 210, Dynasylan^{®} DAMO-M, Dynasylan^{®} DAMO-T of Evonik, 3-aminopropylmethyldiethoxysilane, 3-aminopropylmethyldiethoxysilane formulations, for example, Dynasylan^{®} 1506 of Evonik, 3-aminopropyltriethoxysilane, 3-aminopropyltrimethoxysilane, aqueous siloxanes, which are VOC-free (i.e. free of volatile organic compounds), for example, Dynasylan^{®} HYDROSIL 1151, Dynasylan^{®} HYDROSIL 2627, Dynasylan^{®} HYDROSIL 2909, Dynasylan^{®} HYDROSIL 2929, Dynasylan^{®} HYDROSIL 2776 of Evonik, triaminofunctional propyltrimethoxysilanes, for example, Dynasylan^{®} TRIAMO of Evonik, oligosiloxanes, for example, Dynasylan^{®} 1146 of Evonik, N-(n-butyl)-3-aminopropyltrimethoxysilane, cationic benzylamino-functional silane hydrochloride, for example, Dynasylan^{®} 1161 of Evonik, 2-aminoethyl-3-aminopropylmethyldimethoxysilane, 2-aminoethyl-3-aminopropyltrimethoxysilane, gamma-aminopropyltriethoxysilane, modified aminoorganosilanes ,for example, Silquest^{®} A-1108 of Momentive Performance Materials, gamma-aminopropyltrimethoxysilane, N-beta-(aminoethyl)-gamma-aminopropyltrimethoxysilane, modified aminoorganosilanes, for example, Silquest^{®} A-1126 or A-1128 of Momentive Performance Materials, triamino-functional silanes, for example, Silquest^{®} A-1130 of Momentive Performance Materials, bis-(gamma-trimethoxysilylpropyl)amine, polyazamidesilane, for example, Silquest^{®} A-1387 ofMomentive Performance Materials, delta-aminoneohexyltrimethoxysilane, N-beta-(aminoethyl)-gamma-aminopropylmethyldimethoxysilane, deltaaminoneohexylmethyldimethoxysilane, and N-phenylgamma-aminopropyltrimethoxysilane. Other amino-functionalized silanes or amino-functionalized siloxanes useful in forming the amine-modified epoxy resins include materials available for purchase from Degussa's Sivento division, such as a aminofunctional silane composition (called DYNASYLAN^{®} 1126), an oligomeric diaminosilane system (called DYNASYLAN^{®} 1146), N-vinylbenzyl-N'-aminoethyl-e-aminopropylpolysiloxane (DYNASYLAN^{®} 1175), N-(n-butyl)-3-aminopropyltrimethoxysilane (DYNASYLAN^{®} 1189), aminofunctional silane composition (called DYNASYLAN^{®} 1204), N-(2-aminoethyl)-3-aminopropylmethyldimethoxysilane (DYNASYLAN^{®} 1411), 3-aminopropylmthyldiethoxysilane (DYNASYLAN^{®} 1505), 3-aminopropylmethyldiethoxysilane (DYNASYLAN^{®} 1506), 3-aminopropyltriethoxysilane (DYNASYLAN^{®} AMEO), aminosilane composition (called DYNASYLAN^{®} AMEO-T), 3-aminopropyltrimethoxysilane (DYNASYLAN^{®} AMMO), N-2-aminoethyl-3-aminopropyltrimethoxysilane (DYNASYLAN^{®} DAMO), N-(2-aminoethyl)-3-aminopropyltrimethoxysilane (DYNASYLAN^{®} DAMO-T) and a triamino-functional propyltrimethoxysilane (called DYNASYLAN^{®} TRIAMO). Most preferably the aminoalkoxysilane is selected from 3-aminopropyltrimethoxysilane, 3-aminopropyltriethoxysilane, aminoethylaminopropyltrimethoxy silane, aminoethylaminopropyltriethoxy silane and/or oligomers of them or combination of these, more preferably the aminoalkoxysilane is 3-aminopropyltriethoxysilane.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives - which independently of one another may be included in single components or both components of a two (2K) component composition - are plasticizers, stabilizers including UV stabilizers, antioxidants, tougheners, fillers, reactive diluents, drying agents, adhesion promoters, fungicides, flame retardants, rheological adjuvants, color pigments or color pastes, and/or optionally also, to a small extent, non-reactive diluents.

For completeness, it is noted that in general adjunct materials and additives which contain epoxide-reactive groups will be blended into the hardener component of a two (2K) component composition. Materials that contain epoxide groups or which are reactive with the hardener(s) are generally formulated into the epoxide-containing component of a two (2K) component composition. Unreactive materials may be formulated into either or both of the A and B components.

A "*plasticizer*" for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more polydimethylsiloxane (PDMS).

"*Stabilizers*" for purposes of this invention are to be understood as antioxidants, UV stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Those compositions of the present invention may optionally contain a toughening rubber in the form of in the form of core-shell particles dispersed in the epoxy resin matrix. The term "*core shell rubber*" or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.
- The polymeric material of the core should have a glass transition temperature (T_{g}) of no greater than 0⁰C and preferably a glass transition temperature (T_{g}) of -20⁰C or lower, more preferably - 40⁰C or lower and even more preferably -60⁰C or lower. The polymer of the shell is non-elastomeric, thermoplastic or thermoset polymer having a glass transition temperature (T_{g}) of greater than room temperature, preferably greater than 30°C and more preferably greater than 50°C.
- Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.
- Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.
- It is preferred that any included core-shell rubber particles have an average particle size (d50) of from 10nm to 300nm, for example from 50 nm to 200 nm: said particle size refers to the diameter or largest dimension of a particle in a distribution of particles and is measured via dynamic light scattering.

The present application does not preclude the presence of two types of core shell rubber (CSR) particles with different particle sizes in the composition to provide a balance of key properties of the resultant cured product, including shear strength, peel strength and resin fracture toughness. In this embodiment, smaller included particles (1^{st} CSR type) may have an average particle size of from 10 to 100 nm and larger included particles (2^{nd} CSR type) may have an average particle size of from 120 nm to 300 nm, for example from 150 to 300 nm. The smaller core shell rubber particles should typically be employed in excess of the larger particles on a weight basis: a weight ratio of smaller CSR particles to larger CSR particles of from 3:1 to 5:1 may be employed for instance.
- The core-shell rubber may be selected from commercially available products, examples of which include: Paraloid EXL 2650A, EXL 2655 and EXL2691 A, available from The Dow Chemical Company; the Kane Ace^{®} MX series available from Kaneka Corporation, and in particular MX 120, MX 125, MX 130, MX 136, MX 551, MX553; and, METABLEN SX-006 available from Mitsubishi Rayon.
- The core shell rubber particles should be included in the composition in an amount of from 0 to 10 wt.%, for example from 0 to 5 wt.% based on the total weight of the composition.

As noted, the compositions according to the present invention can additionally contain fillers. Suitable here are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

The pyrogenic and/or precipitated silicic acids advantageously have a BET surface area from 10 to 90 m²/g. When they are used, they do not cause any additional increase in the viscosity of the composition according to the present invention, but do contribute to strengthening the cured composition.

It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silicic acid.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

The total amount of fillers present in the compositions of the present invention will preferably be from 0 to 70 wt.%, and more preferably from 0 to 60 wt.%, based on the total weight of the composition. The desired viscosity of the curable composition will typically be determinative of the total amount of filler added and it is submitted that in order to be readily extrudable out of a suitable dispensing apparatus - such as a tube - the curable compositions should possess a viscosity of from 3000 to 150,000, preferably from 40,000 to 80,000 mPas, or even from 50,000 to 60,000 mPas.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

Examples of suitable pigments are titanium dioxide, iron oxides, or carbon black.

In order to enhance shelf life even further, it is often advisable to further stabilize the compositions of the present invention with respect to moisture penetration through using drying agents. A need also occasionally exists to lower the viscosity of an adhesive or sealant composition according to the present invention for specific applications, by using reactive diluent(s). The total amount of reactive diluents present will typically be up to 15 wt.%, and preferably from 0.5 to 5 wt.%, based on the total weight of the composition. Preferably Silanol is present as diluent.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tertbutylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said solvents and non-reactive diluents constitute *in toto* less than 10 wt.%, in particular less than than 5 wt.% or less than 2 wt.%, based on the total weight of the composition.

For completeness, the compositions of the present invention may comprise one or more monoamines, such as hexylamine and benzylamine.

In order to enhance the physical properties, it is preferred that the two component (2K) composition further comprises a trialkoxy functional silicone prepolymer, which is different from resin a), This prepolymer is condensation curable and can support the crosslinking. Preferably the two component (2K) composition further comprises a trimethoxy silicone prepolymer. Examples are obtainable commercially under the trade name Silmer TMS, like Silmer TMS Di-400. In a preferred embodiment the trialkoxy functional silicone prepolymer is present in an amount of 0.1 to 5 wt.%, more preferably 0.5 to 3 wt.-%, based on the total weight of the composition.

Furthermore, a lubricating particulate additive can be added, preferably in component (A). Some examples of suitable lubricating particulate additives are glycerides, waxes, and other polymers. Specifically, polytetrafluoroethylene, synthetic straight chain hydrocarbons, polyethylene, polypropylene and combinations of the same are adequate lubricating particulate additives. Most preferred are polytetrafluoroethylene, especially micronized polytetrafluoroethylene. In a preferred embodiment the lubricating particulate additive is present in an amount of 0.1 to 5 wt.%, more preferably 0.5 to 3 wt.-%, based on the total weight of the composition.

A preferred embodiment a two component (2K) composition comprising:
(A) a first component comprising:
   a) at least one silicone-based resin comprising epoxy functionalities, and
   b) optionally at least one epoxy resin, which is not a silicone-based resin;
   c) optionally at least one silicone acrylate oligomer;
(B) a second component comprising:
   d) a curative which consists of at least one compound possessing at least two epoxide reactive groups per molecule, said curative being characterized by comprising at least one alkoxy-containing aminofunctional silicone resin,
   e) at least one aminoalkoxysilane
wherein said composition is characterized in that it is free of catalysts and preferably the molar ratio of reactive groups provided in component B to reactive groups in component A is from 1.5 : 1 to 1 : 1.5, preferably from 1.1 : 1 to 1: 1.1, more preferably 1:1. further comprising trialkoxy functional silicone prepolymer, lubricating particulate additive and/or a diluent, preferably in component (A).

In even more preferred embodiment is a two component (2K) composition comprises:
A) a first component comprising, based on the weight of said first component:
   from 5 to 60 wt.% of a) said at least one silicone epoxy resin a);
   optionally from 1 to 50 wt.% of b) said at least one epoxy resin b);
   optionally from 1 to 20 wt.% of c) said at least one silicone acrylate oligomer c)
B) a second component comprising, based on the weight of said first component, preferably consisting of:
   from 50 to 85 wt.% of d) said curative d); preferably from 60 to 80 wt.%
   from 15 to 50 wt.% of e) said at least one aminoalkoxysilane e); preferably from 20 to 40 wt.%
wherein said composition is characterized in that it is free of catalysts and and preferably the molar ratio of reactive groups provided in component B to reactive groups in component A is from 1.5 : 1 to 1 : 1.5, preferably from 1.1 : 1 to 1: 1.1, more preferably 1:1, and comprising in component (A):
- from 0.5 to 5 wt.% of at least one diluent, preferably Silanol,
- from 0.1 to 5 wt.% of at least one trialkoxy functional silicone prepolymer, preferably trimethoxy silicone prepolymer, and/or
- from 0.1 to 5 wt.% of at least one lubricating particulate additive, preferably polytetrafluoroethylene, each based on the total amount of the composition.

### Methods and Applications

For the two component (2K) curable compositions, the reactive components are brought together and mixed in such a manner as to induce the hardening thereof: the reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale liner applications in which volumes of less than 2 liters will generally be used, the preferred packaging for the two component (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the hardener and binder components. In any event, for any package it is important that the binder component be disposed with an airtight and moisture-tight seal, so that both components can be stored for a long time, ideally for 12 months or longer.

The two (2K) component curable compositions should broadly be formulated to exhibit an initial viscosity - determined immediately after mixing, for example, up to two minutes after mixing - of less than 200000 mPa·s, for instance less than 100000 mPa.s, at 25°C. Independently of or additional to said viscosity characteristics, the two (2K) component composition should be formulated to be bubble (foam) free upon mixing and subsequent curing. Moreover, the two component (2K) composition should further be formulated to demonstrate at least one, desirably at least two and most desirably all of the following properties: i) a long pot life, typically of at least 25 minutes and commonly of at least 60 or 120 minutes, which pot life should be understood herein to be the time after which the viscosity of a mixture at 20°C will have risen to more than 50,000 mPas; ii) a maximum exotherm temperature of no greater than 120°C, preferably no greater than 100°C and more preferably no greater than 80°C; and, iii) a Shore A hardness of at least 50, preferably at 60 and more preferably at least 70 after being cured and stored for 7 days at room temperature and 50% relative humidity.

The curing of the compositions of the invention can occur at temperatures in the range of from - 10°C to 120°C, preferably from 0°C to 70°C, and in particular from 20°C to 60°C. The temperature that is suitable depends on the specific compounds present and the desired curing rate and can be determined in the individual case by the skilled artisan, using simple preliminary tests if necessary. Of course, curing at temperatures of from 10°C to 35°C or from 20°C to 30°C is especially advantageous as it obviates the requirement to substantially heat or cool the mixture from the usually prevailing ambient temperature. Where applicable, however, the temperature of the mixture formed from the respective components of a two (2K) component composition may be raised above the mixing temperature and / or the application temperature using conventional means including microwave induction.

The curable compositions according to the invention may find utility *inter alia* in: varnishes; inks; binding agents for fibers and / or particles; the coating of glass; the coating of mineral building materials, such as lime- and / or cement-bonded plasters, gypsum-containing surfaces, fiber cement building materials and concrete; the coating and sealing of wood and wooden materials, such as chipboard, fiber board and paper; the coating of metallic surfaces; the coating of asphalt- and bitumen-containing pavements; the coating and sealing of various plastic surfaces; and, the coating of leather and textiles.

In a particularly preferred embodiment, the composition of the present invention is applied to substrates to produce an adherent, highly abrasion resistant coating. The bonding operation can often be affected a room temperature and effective abrasion resistance can be attained after curing. Moreover, when bonding to the surface of mechanical structures or to a floor or pavement, the coating compositions can provide corrosion protection for the surface and can prevent the surface from being contacted with compounds which would deleterious to the operation or efficiency of the specific structure.

In each of the above described applications, the compositions may applied by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray. For coating and adhesive applications, it is recommended that the compositions be applied to a wet film thickness of from 10 to 500 µm. The application of thinner layers within this range is more economical and provides for a reduced likelihood of thick cured regions that may - for coating applications - require sanding. However, great control must be exercised in applying thinner coatings or layers so as to avoid the formation of discontinuous cured films.
- For completeness, it is noted that the present invention does not preclude the preparation of epoxy adhesives in the form of "*film adhesive*". A pre-polymer mixture of epoxy resins, hardener, and other desired components is applied as a coating onto a polymer film substrate, rolled up and stored at a sufficiently low temperature to inhibit the chemical reactions between the components. When needed, the film adhesive is removed from the low temperature environment and applied to a metal or composite part, the backing is stripped off and the assembly completed and cured in an oven or autoclave.

The following examples are illustrative of the present invention and are not intended to limit the scope of the invention in any way.

### Examples:

The following commercial products were used in the Examples:

| | | |
|---|---|---|
| Epoxy-Silicone resin | Silikopon EF | A silicone epoxy resin with an epoxy equivalent weight of ~450g/mole |
| Epoxy resin | Lapox Arch-11 | Bis (2,3-epoxypropyl) cyclohexane-1,2-dicarboxylate |
| Silicone acrylate | Miramer SIP 910 | |
| oligomer | | |
| Additive 1 | BYK 1796 | Defoamer |
| Filler 1 | Barium sulphate | |
| Filler 2 | Talc powder | |
| Filler 3 | TiO2 | |
| Filler 4 | Polygloss 90 | |
| Thixotropy agent | Aerosil R 972 | |
| Hardener 1 | Silres HP 2000 | Amino functional methyl phenyl alkoxy siloxane resin having an amine number of 2.6-2.9, available from Wacker Chemie |
| Hardener 2 | Dynasylan AMEO | 3-Aminopropyltriethoxysilane |

The following tests were performed in the Examples:
Open Time: This was determined, at room temperature and 50% humidity, as the maximum length of time after the composition has been applied to a substrate in which an adhesive bond may be formed. For example, if the composition may be applied to a first piece of cardboard and: i) after 5 seconds, another piece of cardboard may still be applied and still bonded to the first cardboard piece; but ii) after 6 seconds, the composition may be too hard and set to form a bond between the two cardboard pieces, the open time would be 5 seconds.
Skin formation time: This was determined by applying the coating at a wet layer thickness of 75 µm at 23°C and a relative humidity of 50%. The skin formation considered when fingerprints could no longer be observed after touching the surface with a clean and dry finger. The skin formation time was measured using a timing device.
Gloss at 60 degrees: A glossmeter is an instrument which is used to measure the specular reflection (gloss) of a surface. Gloss is determined by projecting a beam of light at a fixed intensity and angle onto a surface and measuring the amount of reflected light at an equal but opposite angle.
Pull of adhesion on GBMS: This was determined by applying coating on blasted panel of 250-micron thickness at 23 °C and a relative humidity of 50%. The coating was complete cured for 7 days. This test was determined by ASTM D4541.
QUV data for 1000 hrs: This was determined by applying coating on blasted panel of 250 micron thickness at 23°C and a relative humidity of 50%. The coating was complete cured for 7 days. This test was determined by ASTM G154. Using the following conditions: Lamp : UVB-313, Typical Irradiance: 0.71 W/(m2 • nm), Approximate Wavelength: 310 nm, Exposure Cycle: 4 h UV at 60 (±3) °C Black Panel Temperature; 4 h Condensation at 50 (±3) °C Black Panel Temperature. Total time: 1000 hours for exposure.

### Examples 1 to 9

The compositions of the Examples are presented in Table 1, by using different resins, hardeners, filler, and additives to evaluate their performance. Table 1 also describes the different properties of these coating composition. After mixing the two parts, the resulting compositions are evaluated for skin formation time and open time. All these formulations were cured at room temperature and final properties like gloss, hardness and pull of adhesion strength were tested after 7 days full cure. The coating thickness is maintained around 240-260 micron.

When using the combination of hardeners 1 and 2 without a catalyst the skin formation time and open time are in a favorable range. At the same time the gloss, hardness and pull of adhesion are in the desired range, while having a sufficient gloss and pull of adhesion being at the same time hard enough but not to brittle. Without hardener 1 the curing is to fast and leads to brittle coatings. Without hardener 2, the gloss, hardness and pull of adhesion are too low. By adding an epoxy resin and even an silicone acrylate oligomer the results could even be pushed to more favorable properties.

**Table 1**

| | Ex.1 | Ex.2 | Ex.3 | Ex.4 | Ex.5 | Ex.6 | Ex.7 | Ex.8 | Ex.9 |
|---|---|---|---|---|---|---|---|---|---|
| **Component, Part A** | | | | | | | | | |
| Epoxy-Silicone resin | 40 | 40 | 40 | 13 | 13 | 13 | 10 | 10 | 10 |
| Epoxy resin | 0 | 0 | 0 | 27 | 27 | 27 | 24 | 24 | 24 |
| Silicone acrylate oligomer | 0 | 0 | 0 | 0 | 0 | 0 | 6 | 6 | 6 |
| Additive 1 | 0.5 | 0.5 | 0.5 | 0.5 | 0.5 | 0.5 | 0.5 | 0.5 | 0.5 |
| Filler 1 | 26 | 26 | 26 | 26 | 26 | 26 | 26 | 26 | 26 |
| Filler 2 | 23 | 23 | 23 | 23 | 23 | 23 | 23 | 23 | 23 |
| Filler 3 | 3 | 3 | 3 | 3 | 3 | 3 | 3 | 3 | 3 |
| Filler 4 | 6 | 6 | 6 | 6 | 6 | 6 | 6 | 6 | 6 |
| Thixotropy agent | 1.5 | 1.5 | 1.5 | 1.5 | 1.5 | 1.5 | 1.5 | 1.5 | 1.5 |

| **Component, Part B** | | | | | | | | | |
|---|---|---|---|---|---|---|---|---|---|
| *Hardener 1 | 10.8 | 21.55 | 0 | 22.2 | 44.4 | 0 | 19.6 | 39.13 | 0 |
| *Hardener 2 | 4.9 | 0 | 9.7 | 10.1 | 0 | 20.14 | 8.9 | 0 | 17.75 |

| **Properties** | | | | | | | | | |
|---|---|---|---|---|---|---|---|---|---|
| Skin formation time [min] | 50 | 25 | 70 | 70 | 55 | 65 | 70 | 20 | 70 |
| Open time, [min] | 100 | 80 | 130 | 110 | 70 | 140 | 130 | 40 | 160 |
| Gloss at 60 degrees | 80 | 82 | 25 | 62 | 79 | 13.8 | 80 | 65 | 33 |
| Hardness, Shore D | 54 | 68 | 30 | 45 | 64 | 31 | 52 | 53 | 25 |
| Pull of adhesion on GBMS [Mpa] | 15 | 14 | 6 | 15 | 18 | 7 | 13 | 10 | 4 |
| QUV data for 1000 hrs. | No chalking | No chalking | | No chalking | No chalking | | No chalking | No chalking | |

| | | | | | | | | | |
|---|---|---|---|---|---|---|---|---|---|
| * Hardener weight in grams depends on the mix EEW of functional groups of Part A | | | | | | | | | |

## Claims

1. A two component (2K) composition comprising:
(A) a first component comprising:
a) a) at least one silicone-based resin comprising epoxy functionalities, and
b) optionally at least one epoxy resin, which is not a silicone-based resin;
c) optionally at least one silicone acrylate oligomer;
(B) a second component comprising:
d) a curative which consists of at least one compound possessing at least two epoxide reactive groups per molecule, said curative being **characterized by** comprising at least one alkoxy-containing aminofunctional silicone resin,
e) at least one aminoalkoxysilane
wherein said composition is **characterized in that** it is free of catalysts and preferably the molar ratio of reactive groups provided in component B to reactive groups in component A is from 1.5 : 1 to 1 : 1.5, preferably from 1.1 : 1 to 1: 1.1, more preferably 1:1.

2. The two component composition according to claim 1, comprising:
A) a first component comprising, based on the weight of said first component:
from 5 to 60 wt.% of a) said at least one silicone epoxy resin a);
optionally from 1 to 50 wt.% of b) said at least one epoxy resin b);
optionally from 1 to 20 wt.% of c) said at least one silicone acrylate oligomer c);
B) a second component comprising, based on the weight of said first component, preferably consisting of:
from 50 to 85 wt.% of d) said curative d); preferably from 60 to 80 wt.%
from 15 to 50 wt.% of e) said at least one aminoalkoxysilane e); preferably from 20 to 40 wt.%,
wherein said composition is **characterized in that** it is free of catalysts and the molar ratio of reactive groups provided in component B to reactive groups in component A is from 1.5 : 1 to 1 : 1.5, preferably from 1.1 : 1 to 1: 1.1, more preferably 1:1

3. The two component composition according to claim 1 or claim 2, wherein said silicone-based resin comprising epoxy functionalities has an epoxy equivalent weight in the range of from 100 to 1500 g/eq, preferably in the range of from 200 to 1000 g/eq, more preferably in the range of from 300 to 700 g/eq

4. The two component composition according to any one of claims 1 to 3, wherein said epoxy resin b) is selected from cycloaliphatic and aromatic epoxy resins.

5. The two component composition according to any one of claims 1 to 4, wherein the molar ratio of epoxide reactive groups provided in said component B to epoxide groups in component A is from 1.5 : 1 to 1 : 1.5, preferably from 1.1 : 1 to 1: 1.1, more preferably 1:1.

6. The two component composition according to any one of claims 1 to 5, wherein said the molar ratio of silane groups in component B to carbon double bonds, preferably (meth)acrylate groups, is from 1.5 : 1 to 1 : 1.5, preferably from 1.1 : 1 to 1: 1.1, more preferably 1:1.

7. The two component composition according to any one of claims 1 to 6, wherein said curative c) consists of:
from 90 to 100 mol.% of said alkoxy-containing aminofunctional silicone resin(s);
from 0 to 10 mol.% of secondary epoxide reactive compounds.

8. The two component composition according to any one of claims 1 to 7, wherein said alkoxy-containing aminofunctional silicone resin is **characterized by** at least one of:
i) an amine hydrogen equivalent weight of from 100 to 1500 g/eq; and,
ii) a weight average molecular weight (Mw), determined by gel permeation chromatography using polystyrene calibration standards, of from 150 to 10000 g/mol.

9. The two component composition according to any one of claims 1 to 8, wherein said curative c) comprises at least one alkoxy-containing aminofunctional silicone resin (C1) having at least two amine hydrogen atoms per molecule, having an amine hydrogen equivalent weight of from 100 to 1500 g/eq. and having a total alkoxy content (AC) of from 10 to 40 mole percent based on the number of moles of silicon, said resin (C1) comprising the units:
(R3Si(OR')wO(1-w)/2)a (i);
(R2Si(OR')xO(2-x)/2)b (ii);
(RSi(OR')yO(3-y)/2)c (iii);
and,
(Si(OR')zO(4-z/2)d (iv)
wherein: each R is independently selected from a C1-C18 alkyl group, a C6-C18 aryl group, or an aminofunctional hydrocarbon group having the formula -R2NHR3 or -R2NHR2NHR3 of which each R2 is independently a C2-C20 alkylene group and R3 is a C1-C6 alkyl group;
a, b, c, and d define the mole fractions of each unit (i) to (iv) respectively, such that a+b+c+d=1; and,
w, x, y, and z define the mole fractions of alkoxy groups such that 0 ≤ w < 1, 0 ≤ x < 2, 0 ≤ y < 3, and, 0 ≤ z < 4.

10. The two component composition according to claim 9, wherein each R in resin (C1) is independently selected from a C1-C6 alkyl group, a C6-C18 aryl group or aminofunctional hydrocarbon group having the formula -R1NHR2 or -R1NHR1NHR2 of which each R1 is independently a C2-C8 alkylene group and R2 is a C1-C2 alkyl group.

11. The two component composition according to claim 9 or claim 10, wherein the aminofunctional silicone resin (C1) has both methyl and phenyl substitution at R.

12. The two component composition according to any one of claims 9 to 11, wherein a in said aminofunctional silicone resin (C1) has a value of from 0 to 0.10, b has a value of from 0.15 to 0.6, c meets the condition 0 < c < 0.85 and d has a value of from 0 to 0.05.

13. The two component composition according to any one of claims 1 to 12, wherein the aminoalkoxysilane e) has the general formula (I) 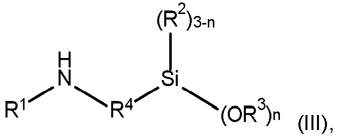 wherein R¹ is hydrogen, R² and R³ are same or different and are, independently from one another, selected from a linear or branched, substituted or unsubstituted C1-C20 alkyl or C6-C18 aryl residue, preferably selected from a C1-C8 alkyl residue, more preferably a methyl, ethyl or propyl residue, which may be interrupted by at least one heteroatom; R⁴ is selected from a linear or branched, substituted or unsubstituted C1-C20 alkylene residue, preferably a C1-C8 alkylene, more preferably a methylene, ethylene, 1,3-propylene, 2-methyl-1,3-propylene, or 1,4-butylene residue, most preferably a methylene or 1,3-propylene residue, which may be interrupted by at least one heteroatom; and n is 0, 1, 2 or 3, preferably 3.

14. A cured product obtained from the two component (2K) composition as defined in any one of claims 1 to 13.

15. Use of the cured reaction product as defined in claim 14 as a coating, sealant or adhesive.

## Patentansprüche

1. Zweikomponentenzusammensetzung (2K-Zusammensetzung), umfassend:
(A) eine erste Komponente, umfassend:
a) a) mindestens ein silikonbasiertes Harz umfassend Epoxidfunktionalitäten und
b) optional mindestens ein Epoxidharz, das kein silikonbasiertes Harz ist;
c) optional mindestens ein Silikonacrylatoligomer;
(B) eine zweite Komponente, umfassend:
d) ein Härtungsmittel, das aus mindestens einer Verbindung besteht, die mindestens zwei epoxidreaktive Gruppen pro Molekül besitzt, wobei das Härtungsmittel **dadurch gekennzeichnet ist, dass** es mindestens ein alkoxyhaltiges aminofunktionelles Silikonharz umfasst,
e) mindestens ein Aminoalkoxysilan;
wobei die Zusammensetzung **dadurch gekennzeichnet ist, dass** sie frei von Katalysatoren ist und vorzugsweise das Molverhältnis von reaktiven Gruppen, die in Komponente B bereitgestellt sind, zu reaktiven Gruppen in Komponente A von 1,5 : 1 bis 1 : 1,5, vorzugsweise von 1,1 : 1 bis 1 : 1,1, stärker bevorzugt 1 : 1 beträgt.

2. Zweikomponentenzusammensetzung nach Anspruch 1, umfassend:
A) eine erste Komponente, umfassend, basierend auf dem Gewicht der Komponente:
von zu 5 bis 60 Gew.-% a) mindestens ein Epoxidharz a);
von zu 1 bis 50 Gew.-% a) mindestens ein Epoxidharz b);
optional von zu 1 bis 20 Gew.-% c) das mindestens eine Silikonacrylatoligomer c);
B) eine zweite Komponente umfassend, bezogen auf das Gewicht der ersten Komponente, vorzugsweise bestehend aus:
von zu 50 bis 85 Gew.-% d) das Härtungsmitel d); vorzugsweise von zu 60 bis 80 Gew.-%
von zu 15 bis 50 Gew.-% e) das mindestens eine Aminoalkoxysilan e); vorzugsweise von zu 20 bis 40 Gew.-%,
wobei die Zusammensetzung **dadurch gekennzeichnet ist, dass** sie frei von Katalysatoren ist und das Molverhältnis von reaktiven Gruppen, die in Komponente B bereitgestellt sind, zu reaktiven Gruppen in Komponente A von 1,5 : 1 bis 1 : 1,5 , vorzugsweise von 1,1 : 1 bis 1 : 1,1, stärker bevorzugt 1 : 1 beträgt.

3. Zweikomponentenzusammensetzung nach Anspruch 1 oder 2, wobei das silikonbasierte Harz, umfassend Epoxidfunktionalitäten, ein Epoxidäquivalentgewicht in dem Bereich von 100 bis 1500 g/Eq aufweist, vorzugsweise in dem Bereich von 200 bis 1000 g/Eq, stärker bevorzugt in dem Bereich von 300 bis 700 g/Eq aufweist.

4. Zweikomponentenzusammensetzung nach einem der Ansprüche 1 bis 3, wobei das Epoxidharz b) aus cycloaliphatischen und aromatischen Epoxidharzen ausgewählt ist.

5. Zweikomponentenzusammensetzung nach einem der Ansprüche 1 bis 4, wobei das Molverhältnis von epoxidreaktiven Gruppen, die in der Komponente B bereitgestellt sind, zu Epoxidgruppen in Komponente A von 1,5 : 1 bis 1 : 1,5, vorzugsweise von 1,1 : 1 bis 1 : 1,1, stärker bevorzugt 1 : 1 beträgt.

6. Zweikomponentenzusammensetzung nach einem der Ansprüche 1 bis 5, wobei das Molverhältnis von Silangruppen in Komponente B zu Kohlenstoffdoppelbindungen, vorzugsweise (Meth)acrylatgruppen, von 1,5 : 1 bis 1 : 1,5, vorzugsweise von 1,1 : 1 bis 1 : 1,1, stärker bevorzugt 1 : 1 beträgt.

7. Zweikomponentenzusammensetzung nach einem der Ansprüche 1 bis 6, wobei das Härtungsmittel c) besteht aus:
von zu 90 bis 100 Mol-% das/die alkoxyhaltige(n) aminofunktionelle(n) Silikonharz(e);
von zu 0 bis 10 Mol-% sekundäre epoxidreaktive Verbindungen.

8. Zweikomponentenzusammensetzung nach einem der Ansprüche 1 bis 7, wobei das alkoxyhaltige aminofunktionelle Silikonharz **gekennzeichnet ist durch** mindestens eines von:
i) einem Aminwasserstoffäquivalentgewicht von 100 bis 1500 g/Eq; und
ii) einem gewichtsmittleren Molekulargewicht (Mw), bestimmt durch Gelpermeationschromatographie, unter Verwendung von Polystyrolkalibrierung, von 150 bis 10000 g/mol.

9. Zweikomponentenzusammensetzung nach einem der Ansprüche 1 bis 8, wobei das Härtungsmittel c) mindestens ein alkoxyhaltiges aminofunktionelles Silikonharz (C1) umfasst, das mindestens zwei Aminwasserstoffatome pro Molekül aufweist, das ein Aminwasserstoffäquivalentgewicht von 100 bis 1500 g/Eq aufweist, und einen Gesamtalkoxygehalt (AC) von 10 bis 40 Molprozent aufweist, bezogen auf die Molzahl von Silicium, das Harz (C1) umfassend die Einheiten:
(R3Si(OR')wO(1-w)/2)a (i);
(R2Si(OR')xO(2-x)/2)b (ii);
(RSi(OR')yO(3-y)/2)c (iii);
und
(Si(OR')zO(4-z/2)d (iv)
wobei: jedes R unabhängig ausgewählt ist aus einer C1-C18-Alkylgruppe, einer C6-C18-Arylgruppe oder einer aminofunktionellen Kohlenwasserstoffgruppe, die die Formel -R2NHR3 oder -R2NHR2NHR3 aufweist, wobei jedes R2 unabhängig eine C2-C20-Alkylengruppe ist und R3 eine C1-C6-Alkylgruppe ist;
a, b, c beziehungsweise d jeweils die Stoffmengenanteile von jeder Einheit (i) bis (iv) derart definieren, dass a+b+c+d=1; und
w, x, y und z die Stoffmengenanteile von Alkoxygruppen derart definieren, dass 0 ≤ w < 1, 0 < x < 2, 0 ≤ y < 3 und 0 ≤ z < 4.

10. Zweikomponentenzusammensetzung nach Anspruch 9, wobei jedes R in Harz (C1) unabhängig ausgewählt ist aus einer C1-C6-Alkylgruppe, einer C6-C18-Arylgruppe oder aminofunktionellen Kohlenwasserstoffgruppe, die die Formel -R1NHR2 oder -R1NHR1NHR2 aufweist, wobei jedes R1 unabhängig eine C2-C8-Alkylengruppe ist und R2 eine C1-C2-Alkylgruppe ist.

11. Zweikomponentenzusammensetzung nach Anspruch 9 oder 10, wobei das aminofunktionelle Silikonharz (C1) an R sowohl eine Methyl- als auch eine Phenylsubstitution aufweist.

12. Zweikomponentenzusammensetzung nach einem der Ansprüche 9 bis 11, wobei a in dem aminofunktionellen Silikonharz (C1) einen Wert von 0 bis 0,10 aufweist, b einen Wert von 0,15 bis 0,6 aufweist, c die Bedingung 0 < c < 0,85 erfüllt und d einen Wert von 0 bis 0,05 aufweist.

13. Zweikomponentenzusammensetzung nach einem der Ansprüche 1 bis 12, wobei das Aminoalkoxysilan e) die allgemeine Formel (I) aufweist 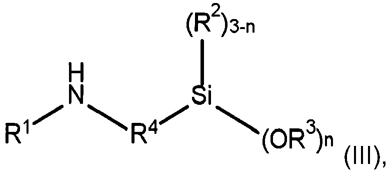 wobei R¹ Wasserstoff ist, R² und R³ gleich oder unterschiedlich sind und unabhängig voneinander ausgewählt sind aus einem linearen oder verzweigten, substituierten oder nicht substituierten C1-C20-Alkyl- oder C6-C18-Arylrest, vorzugsweise ausgewählt aus einem C1-C8-Alkylrest, stärker bevorzugt einem Methyl-, Ethyl- oder Propylrest, welcher durch mindestens ein Heteroatom unterbrochen sein kann; R⁴ ausgewählt ist aus einem linearen oder verzweigten, substituierten oder nicht substituierten C1-C20-Alkylenrest, vorzugsweise einem C1-C8-Alkylen, stärker bevorzugt einem Methylen-, Ethylen-, 1,3-Propylen-, 2-Methyl-1,3-propylen- oder 1,4-Butylenrest, am meisten bevorzugt einem Methylen- oder 1,3-Propylenrest, der durch mindestens ein Heteroatom unterbrochen sein kann; und n 0, 1, 2 oder 3, vorzugsweise 3 ist.

14. Gehärtetes Produkt, das aus der Zweikomponentenzusammensetzung (2K-Zusammensetzung) nach einem der Ansprüche 1 bis 13 erhalten wird.

15. Verwendung des gehärteten Umsetzungsprodukts, wie in Anspruch 14 definiert, als eine Beschichtung, ein Dichtungsmaterial oder einen Klebstoff.

## Revendications

1. Composition à deux composants (2K) comprenant :
(A) un premier composant comprenant :
a) a) au moins une résine à base de silicone comprenant des fonctionnalités époxy, et
b) éventuellement au moins une résine époxy, qui n'est pas une résine à base de silicone ;
c) éventuellement au moins un oligomère d'acrylate de silicone ;
(B) un second composant comprenant :
d) un agent de durcissement qui est constitué d'au moins un composé possédant au moins deux groupes réactifs aux époxydes par molécule, ledit agent de durcissement étant **caractérisé en ce qu'**il comprend au moins une résine de silicone à fonctionnalité amine à teneur en alcoxy,
e) au moins un aminoalcoxysilane
dans laquelle ladite composition est **caractérisée en ce qu'elle** est dépourvue de catalyseurs et de préférence le rapport molaire des groupes réactifs fournis dans le composant B aux groupes réactifs dans le composant A est de 1,5: 1 à 1: 1,5, de préférence de 1,1: 1 à 1: 1,1, et de préférence est de 1:1.

2. Composition à deux composants selon la revendication 1, comprenant :
A) un premier composant comprenant, sur la base du poids dudit premier composant :
de 5 à 60 % en poids de a) ladite au moins une résine époxy de silicone a) ;
éventuellement de 1 à 50 % en poids de b) ladite au moins une résine époxy b) ;
éventuellement de 1 à 20 % en poids de c) ledit au moins un oligomère d'acrylate de silicone c) ;
B) un second composant comprenant, sur la base du poids dudit premier composant, de préférence constitué de :
de 50 à 85 % en poids de d) ledit agent de durcissement d) ; de préférence de 60 à 80 % en poids
de 15 à 50 % en poids de e) ledit au moins aminoalcoxysilane e) ; de préférence de 20 à 40 % en poids,
dans laquelle ladite composition est **caractérisée en ce qu'**elle est dépourvue de catalyseurs et le rapport molaire des groupes réactifs fournis dans le composant B aux groupes réactifs dans le composant A va de 1,5: 1 à 1: 1,5, de préférence de 1,1: 1 à 1: 1,1, et de préférence est de 1:1

3. Composition à deux composants selon la revendication 1 ou la revendication 2, dans laquelle ladite résine à base de silicone comprenant des fonctionnalités époxy a un poids équivalent d'époxy dans la plage allant de 100 à 1 500 g/éq., de préférence dans la plage allant de 200 à 1 000 g/éq., plus préférablement dans la plage allant de 300 à 700 g/éq

4. Composition à deux composants selon l'une quelconque des revendications 1 à 3, dans laquelle ladite résine époxy b) est choisie parmi les résines époxy cycloaliphatiques et aromatiques.

5. Composition à deux composants selon l'une quelconque des revendications 1 à 4, dans laquelle le rapport molaire des groupes réactifs aux époxydes fourni dans ledit composant B aux groupes époxyde dans le composant A va de 1,5 : 1 à 1: 1,5, de préférence de 1,1: 1 à 1: 1,1, et de préférence est de 1:1.

6. Composition à deux composants selon l'une quelconque des revendications 1 à 5, dans laquelle ledit rapport molaire des groupes silane dans le composant B aux doubles liaisons carbone, de préférence aux groupes (méth)acrylate, va de 1,5 : 1 à 1: 1,5, de préférence de 1,1: 1 à 1: 1,1, et de préférence est de 1:1.

7. Composition à deux composants selon l'une quelconque des revendications 1 à 6, dans laquelle ledit agent de durcissement c) consiste en :
90 à 100 % en moles de ladite ou desdites résines de silicone à fonctionnalité amine à teneur en alcoxy ;
0 à 10 % en moles de composés secondaires réactifs aux époxydes.

8. Composition à deux composants selon l'une quelconque des revendications 1 à 7, dans laquelle ladite résine de silicone à fonctionnalité amine à teneur en alcoxy est **caractérisée par** au moins l'un parmi :
i) un poids équivalent d'hydrogène d'amine allant de 100 à 1 500 g/éq ; et,
ii) une masse moléculaire moyenne en poids (Mw), déterminée par chromatographie par perméation de gel à l'aide d'étalons de polystyrène, allant de 150 à 10 000 g/mol.

9. Composition à deux composants selon l'une quelconque des revendications 1 à 8, dans laquelle ledit agent de durcissement c) comprend au moins une résine (C1) de silicone à fonctionnalité amine à teneur en alcoxy ayant au moins deux atomes d'hydrogène d'amine par molécule, ayant un poids équivalent d'hydrogène d'amine allant de 100 à 1 500 g/éq. et ayant une teneur totale en alcoxy (AC) allant de 10 à 40 pour cent en moles sur la base du nombre de moles de silicium, ladite résine (C1) comprenant les motifs :
(R3Si(OR')wO(1-w)/2)a (i) ;
(R2Si(OR')xO(2-x)/2)b (ii);
(RSi(OR')yO(3-y)/2)c (iii) ;
et,
(Si(OR')zO(4-z/2)d (iv)
où : chaque R est indépendamment choisi parmi un groupe alkyle en C1-C18, un groupe aryle en C6-C18, ou un groupe hydrocarboné à fonctionnalité amine ayant la formule -R2NHR3 ou -R2NHR2NHR3 dont chaque R2 est indépendamment un groupe alkylène en C2-C20 et R3 est un groupe alkyle en C1-C6 ;
a, b, c, et d définissent respectivement les fractions en moles de chaque motif (i) à (iv), de telle sorte que a + b + c + d = 1 ; et,
w, x, y, et z définissent les fractions en moles de groupes alcoxy de telle sorte que 0 ≤ w < 1, 0 ≤ x < 2, 0 ≤ y < 3, et 0 ≤ z < 4.

10. Composition à deux composants selon la revendication 9, dans laquelle chaque R dans la résine (C1) est indépendamment choisi parmi un groupe alkyle en C1-C6, un groupe aryle en C6-C18 ou un groupe hydrocarboné à fonctionnalité amine ayant la formule -R1NHR2 ou -R1NHR1NHR2 dont chaque R1 est indépendamment un groupe alkylène en C2-C8 et R2 est un groupe alkyle en C1-C2.

11. Composition à deux composants selon la revendication 9 ou la revendication 10, dans laquelle la résine (C1) de silicone à fonctionnalité amine a à la fois une substitution méthyle et phényle en R.

12. Composition à deux composants selon l'une quelconque des revendications 9 à 11, dans laquelle a dans ladite résine (C1) de silicone à fonctionnalité amine a une valeur allant de 0 à 0,10, b a une valeur allant de 0,15 à 0,6, c satisfait à la condition 0 < c < 0,85 et d a une valeur allant de 0 à 0,05.

13. Composition à deux composants selon l'une quelconque des revendications 1 à 12, dans laquelle l'aminoalcoxysilane e) répond à la formule générale (I) 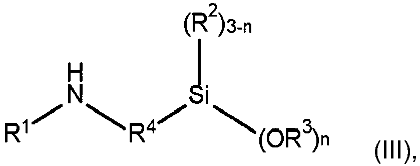 où R¹ est hydrogène, R² et R³ sont identiques ou différents et sont, indépendamment l'un de l'autre, choisis parmi un résidu alkyle en C1-C20 ou aryle en C6-C18 linéaire ou ramifié, substitué ou non substitué, de préférence choisis parmi un résidu alkyle en C1-C8, plus préférablement un résidu méthyle, éthyle ou propyle, qui peut être interrompu par au moins un hétéroatome ; R⁴ est choisi parmi un résidu alkylène en C1-C20 linéaire ou ramifié, substitué ou non substitué, de préférence un alkylène en C1-C8, plus préférablement un résidu méthylène, éthylène, 1,3-propylène, 2-méthyl-1,3-propylène ou 1,4-butylène, le plus préférablement un résidu méthylène ou 1,3-propylène, qui peut être interrompu par au moins un hétéroatome ; et n est 0, 1, 2 ou 3, de préférence 3.

14. Produit durci obtenu à partir de la composition à deux composants (2K) selon l'une quelconque des revendications 1 à 13.

15. Utilisation du produit de réaction durci selon la revendication 14 en tant que revêtement, agent de scellement ou adhésif.
